# FASCICULE DE BREVET EUROPEEN

(11) **EP 1 043 220 B1**
(45) Date de publication et mention de la délivrance du brevet: **26.05.2004**
(21) Numéro de dépôt: 00490012.2
(22) Date de dépôt: 27.03.2000
(51) Int. Cl.: B62J 7/08, B62J 9/00

(54) **Dispositif de fixation d'un accessoire sur un porte-bagages**
Befestigungsvorrichtung eines Zubehörs an einem Gepäckträger
Device for attaching an accessory to a luggage carrier

(30) Priorité: 31.03.1999 FR 9904216
(43) Date de publication de la demande: 11.10.2000
(73) Titulaire: DECATHLON, 59650 Villeneuve d'Ascq (FR)
(72) Inventeur: Geli, Frédéric, 59800 Lille (FR)
(74) Mandataire: Hennion, Jean-Claude

(56) Documents cités:
- WO-A-97/33786
- DE-A- 4 429 075
- DE-U- 9 310 998
- NL-A- 8 201 395

## Description

La présente invention concerne un dispositif permettant de fixer un panier, porte-bébé ou tout autre accessoire sur le porte-bagages d'une bicyclette, motocyclette ou autre moyen de locomotion.

On a déjà proposé par le document DE 4429075 un support amovible destiné à la fixation d'un panier sur le porte-bagages d'une bicyclette, comprenant un élément de base et qui peut être rapporté de manière fixe sur le porte-bagage à l'aide de premiers moyens de fixation, un élément adaptateur qui peut être relié de manière fixe à la zone inférieure du panier à l'aide de seconds moyens de fixation, des parties de coopération associées sur l'élément de base et sur l'élément adaptateur pour une coopération réciproque par complémentarité conforme et un mécanisme de verrouillage pouvant être actionné à la main entre l'élément de base et l'élément adaptateur.

Sur la base de ce concept général le document DE 429075 propose, pour obtenir la coopération entre l'élément de base et l'élément adaptateur, un évidement central de forme circulaire prévu dans la plaque et sur l'élément adaptateur et une zone circulaire qui fait saillie vers le bas, de préférence, une collerette annulaire conique le long d'un évidement de matière, cette zone circulaire comportant un chanfrein d'introduction vers l'évidement central de la plaque. Ainsi pour obtenir la coopération il faut que l'utilisateur fasse pénétrer dans l'évidement central de la plaque la zone circulaire en saillie dans des conditions telles qu'il peut faire pivoter le panier supportant l'élément adaptateur pour obtenir le blocage en position du panier par rapport à la plaque.

. Ce mode de réalisation est très complexe du point de vue de sa fabrication et difficile à mettre en oeuvre pour l'utilisateur puisqu'il nécessite un placement particulier des deux éléments les uns par rapport aux autres avant de pouvoir effectuer le pivotement de blocage en position.

Le document WO 97/33786 concerne un dispositif de support pour panier ou autre récipient similaire, pouvant être fixé sur un porte-bagages, répondant au concept général précité. Ce dispositif consiste en une plaque qui peut être posée sur le porte-bagages avec sur le côté inférieur de celle-ci des moyens destinés à relier la plaque au porte-bagages; des éléments de retenue en forme de crochet sont prévus sur le côté supérieur de la plaque pour la fixation amovible du panier ou du récipient, l'un au moins des éléments de retenue pouvant être transféré d'une position de verrouillage dans une position de déverrouillage à l'encontre de l'action d'une précontrainte. La fixation du panier ou du récipient étant obtenue grâce aux éléments de retenue qui enserrent, à la manière de pinces, des pattes, nervures ou autres embouts similaires du récipient.

Le dispositif décrit dans ce document WO 97/33786 nécessite donc d'utiliser un panier ou autre récipient qui soit équipé de pattes, nervures ou autres embouts permettant son accrochage avec les éléments de retenue portés sur la plaque qui elle-même est rapportée sur le porte-bagages grâce à des moyens de liaison tels que des boucles, des pinces ou autres éléments similaires pouvant être vissés sur la plaque et enserrant les entretoises du porte-bagages.

Le but que s'est fixé le demandeur est de proposer un dispositif de fixation d'un accessoire sur un porte-bagages qui s'inspire du concept général précité mais qui soit beaucoup plus simple de fabrication et d'utilisation.

Ce but est parfaitement atteint par le dispositif de l'invention qui est du type comportant une plaque à fixer à l'accessoire qui est équipée de moyens de liaison au porte-bagages.

Selon l'invention, le porte-bagages comporte :
a) latéralement, deux tubes longitudinaux définissant l'ossature du porte-bagages, chaque tube étant muni dans la zone avant du porte-bagages, d'une pièce d'arrêt intermédiaire ;
b) à l'arrière et en dessous des deux tubes, un premier moyen de verrouillage et une poignée transversale d'actionnement dudit premier moyen de verrouillage.

De plus la plaque à fixer à l'accessoire comporte :
c) latéralement et sous le plan de la plaque (2) deux prolongement avant (2e) orientés vers l'avant de la plaque (2) ;
d) des moyens (2c, 2d) de maintien latéral de la plaque à fixer (2) par rapport aux tubes longitudinaux (4a, 4b) ;
e) et, à l'arrière et sous le plan de la plaque (2), un second moyen de verrouillage (2h) apte à coopérer avec le premier moyen de verrouillage (8b) du porte-bagages (1) ;

Enfin, le porte-bagages et la plaque sont conformés en sorte que, pour la fixation de la plaque sur le porte-bagages, les deux prolongements étant introduits sous les deux pièces d'arrêt et les moyens de maintien latéral étant appliqués sur les deux tubes longitudinaux, le premier et le second moyens de verrouillage coopèrent pour bloquer la plaque et le porte-bagages l'un à l'autre.

Lorsque les deux prolongements de la plaque sont introduits sous les deux pièces d'arrêt intermédiaires, celles-ci remplissent une double fonction de blocage en position. D'une part, elles empêchent tout déplacement vers l'avant de la plaque et d'autre part tout soulèvement de celle-ci, comme cela ressortira mieux de la description qui sera donnée ci-après d'un exemple de réalisation.

Ainsi, il suffit d'appliquer la plaque à fixer sur les deux tubes longitudinaux, de la déplacer jusqu'à ce que les prolongements viennent se placer d'eux-mêmes sous les pièces d'arrêt, puis de faire pivoter vers le bas la plaque jusqu'à ce que les moyens de maintien latéral s'appliquent sur les tubes longitudinaux et que les moyens de verrouillage coopèrent l'un avec l'autre et bloquent définitivement en position la plaque et donc l'accessoire sur laquelle ladite plaque est fixée, sur le porte-bagages. Pour le retrait de l'accessoire, il suffit à l'utilisateur de se saisir de la poignée transversale qui se trouve sous l'arrière, du porte-bagages, de l'actionner en sorte de désolidariser les moyens de verrouillage, tout en faisant pivoter et en ramenant l'accessoire vers l'arrière, de manière à dégager les prolongements du dessous des pièces d'arrêt intermédiaires.

Selon un mode de réalisation préféré, les moyens de maintien latéral de la plaque à fixer par rapport aux tubes longitudinaux consistent en deux portions ou tronçons de portions longitudinales en U, disposées latéralement et sous le plan de la plaque à fixer et qui sont ouvertes vers le bas en sorte de pouvoir recouvrir les deux tubes longitudinaux lorsque la plaque à fixer est bloquée sur le porte-bagages.

Avantageusement, chacun des prolongements prolonge alors une branche du U desdites portions.

De préférence, les deux pièces d'arrêt intermédiaires sont constituées par une entretoise plane s'étendant horizontalement entre les deux tubes longitudinaux ; cette entretoise assure également la rigidité du porte-bagages.

De préférence, le premier moyen de verrouillage est du type tige montée pivotante sous les deux tubes longitudinaux ce qui permet d'obtenir un porte-bagages ayant une structure légère et simple à réaliser industriellement.

Selon un mode de réalisation préféré, la poignée est constituée d'une tige qui comprend une première portion faisant office de poignée et une seconde portion faisant office de premier moyen de verrouillage et est montée pivotante entre la première portion et la seconde portion.

Avantageusement, le premier moyen de verrouillage est muni de moyens de rappel qui permettent le blocage des moyens de verrouillage lorsque ceux-ci ont coopéré pour bloquer la plaque et le porte-bagages l'un à l'autre.

Selon un mode de réalisation préféré, le porte-bagages comporte également, une butée transversale arrière formant entretoise entre les deux tubes longitudinaux formant l'ossature du porte-bagages et s'étendant sous les tubes, sensiblement perpendiculairement au plan défini par les tubes longitudinaux de l'ossature du porte-bagages. La présence de cette butée permet, comme cela le sera expliqué ultérieurement, de renforcer le blocage en translation de la plaque et du porte-bagages.

La présente invention sera mieux comprise et ses caractéristiques et avantages apparaîtront mieux à la lecture de la description qui suit et fait référence aux dessins annexés représentant un mode de réalisation préféré de la présente invention, présenté à titre d'exemple non limitatif et sur lesquels :
- la figure 1 une vue générale du mode de réalisation préféré de la présente invention, la plaque et le porte-bagages étant totalement désolidarisés ;
- la figure 2 représente une coupe selon l'axe II du dispositif de la figure 1 ;
- la figure 3 représente le porte-bagages la plaque de la figure 1, lors de la fixation de cette dernière sur le porte-bagages;
- la figure 4 représente une coupe selon l'axe IV-IV du dispositif de la figure 1, lorsque la plaque et le porte-bagages sont bloqués l'un à l'autre.

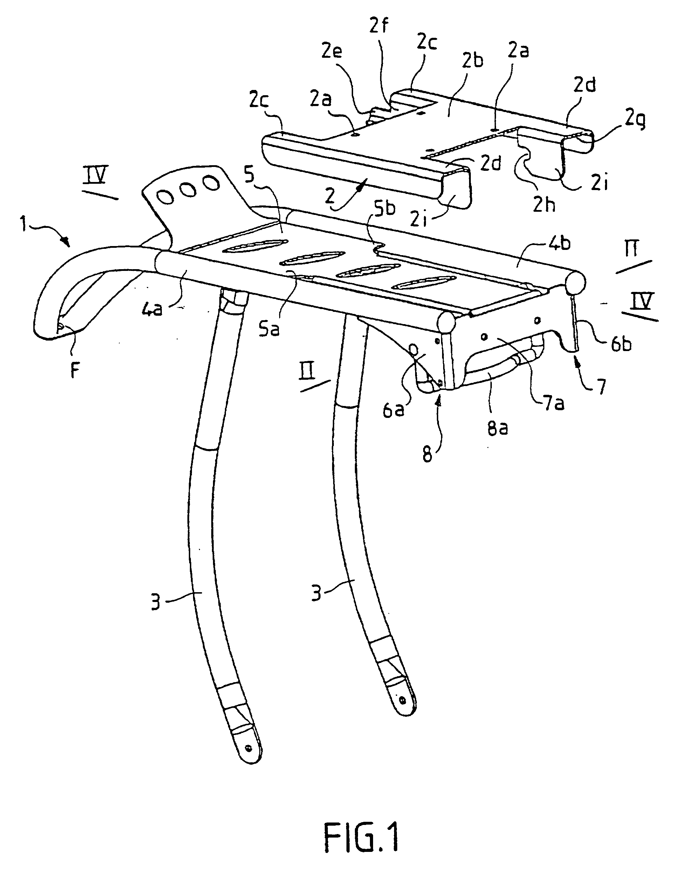

Comme représenté sur la figure 1, un mode de réalisation préféré de la présente invention comporte un porte-bagages 1 et une plaque à fixer 2.

Le porte-bagages 1 comporte deux montants 3 destinés à être fixés au moyeu de la roue du véhicule devant être équipé du dispositif de l'invention et solidaires de deux tubes longitudinaux 4a et 4b formant l'ossature du porte-bagages 1. Sur l'exemple représenté, les deux tubes 4a et 4b sont reliés à une de leurs extrémités par une pièce de connexion F destinée à la fixation du porte bagages à l'arrière de la selle du véhicule devant être équipé du dispositif de l'invention. On définit l'avant du porte-bagages comme étant l'extrémité du porte-bagages correspondant à la pièce de connexion F, l'arrière du porte-bagages 1 étant alors la zone opposée à cette pièce de connexion F.

Chaque tube 4a et 4b est équipé d'une pièce d'arrêt intermédiaire, respectivement 5a et 5b qui, dans l'exemple représenté constituent les bords d'une plaque continue 5 formant entretoise entre les deux tubes 4a et 4b et qui s'étend, en partie centrale, jusqu'à l'extrémité arrière des tubes 4a et 4b, ménageant ainsi deux évidements latéraux longitudinaux entre chacun des tubes 4a, 4b et la partie centrale de la plaque 5. Les tubes 4a et 4b sont équipées, dans la zone arrière du porte-bagages 1, de renforts latéraux 6a et 6b, solidaires du dessous des tubes 4a et 4b et s'étendant sensiblement parallèlement aux montants 3.

L'extrémité arrière du porte-bagages 1 est également munie d'une butée transversale arrière 7 fixée sous les tubes 4a et 4b qui forme une entretoise entre les tubes longitudinaux 4a, 4b et entre les renforts latéraux arrières 6a, 6b, qui est solidaire du dessous de l'extrémité arrière de la pièce d'arrêt intermédiaire 5 et qui s'étend sensiblement perpendiculairement au plan défini par les tubes 4a et 4b. Cette butée transversale arrière 7 peut éventuellement être équipée, sur sa face externe 7a, d'un catadioptre ou de tout autre accessoire lumineux ou réfléchissant.

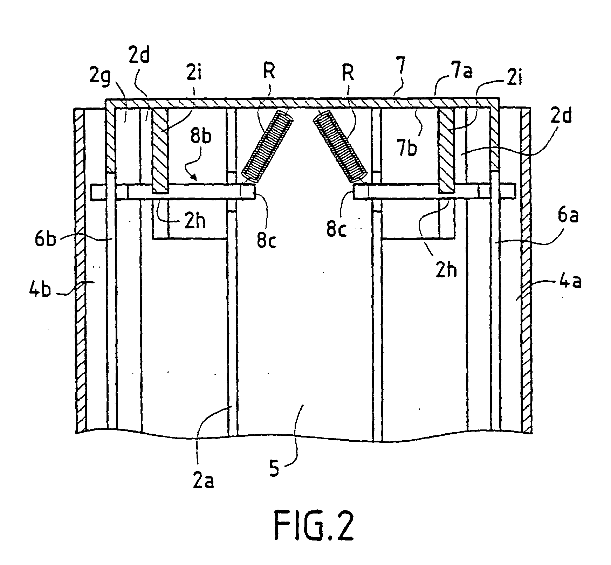

Le porte-bagages 1 comporte également une poignée transversale 8 montée pivotante au niveau des renforts 6a et 6b et qui va être maintenant plus amplement décrite, en référence aux figures 1 et 2.

La poignée transversale 8 est formée par une tige qui comporte une première portion 8a faisant office de poignée (figure 1) et une seconde portion 8b faisant office de premier moyen de verrouillage (figure 2). La tige est montée pivotante par des axes solidaires des renforts 6a et 6b, entre les deux portions 8a et 8b, en sorte que la première portion 8a formant poignée étant tirée vers l'arrière du porte-bagages 1, la seconde portion 8b pivote vers l'avant du porte-bagages 1.

Les extrémités 8c de la portion 8b faisant office de premier moyen de verrouillage sont munies de moyens de rappel qui sont, dans l'exemple particulier représenté ici, constitués de deux ressorts R. Une extrémité de chaque ressort R est solidaire d'une extrémité 8c de la seconde portion 8b de la poignée 8, l'autre extrémité du ressort R étant solidaire de la face interne 7b de la butée transversale 7 en sorte de maintenir les deux extrémités 8c dans un plan parallèle au plan défini par les deux tubes longitudinaux 4a et 4b. Une telle poignée formée par une seule tige qui fait à la fois office de moyens de préhension (portion 8a) et de premier moyen de verrouillage (portion 8b) permet de. simplifier et d'alléger la structure du dispositif de l'invention.

La plaque à fixer 2 comporte des moyens de liaison 2a de l'accessoire sur la plaque 2 qui équipent la partie plane 2b de la plaque 2. Comme représenté sur la figure 1, ces moyens de liaison 2a peuvent être des perforations, l'accessoire étant alors, par exemple, fixé au moyen de tige filetées et de boulons sur la plaque 2. Le mode de fixation de la plaque 2 à l'accessoire n'est en rien limitatif de la présente invention.

La plaque à fixer 2 est également munie de moyens de maintien latéral par rapport aux tubes longitudinaux qui, dans le mode de réalisation préféré ici représenté, consistent en deux tronçons longitudinaux avant 2c et en deux tronçons longitudinaux arrière 2d formant un U ouvert vers le bas. L'avant et l'arrière de la plaque 2 sont définis en référence à la position de celle-ci lorsqu'elle est fixée sur le porte-bagages 1; l'avant de la plaque 2 correspondant à l'avant du porte-bagages 1 et respectivement pour l'arrière de la plaque 2. Ces tronçons 2c et 2d dépassent tous deux de la partie plane 2b de la plaque 2.

Selon d'autres variantes non représentées, les moyens de maintien latéral sont constitués de crochets rapportés sous la plaque à fixer 2 et qui sont prévus pour être pincés sur les tubes longitudinaux ou de portions longitudinales présentant une section en arc de cercle adaptée pour être accrochée aux tubes longitudinaux.

Dans le mode de réalisation préféré ici représenté, chacun des prolongements avant 2e prolonge la portion inférieure de la branche intérieure 2f du U formé par le tronçon 2c. De plus, chaque tronçon 2d comporte une portion arrière 2g et un second moyen de verrouillage qui se présente, dans l'exemple particulier ici représenté, sous la forme d'une encoche 2h, équipant la portion inférieure de la branche intérieure 2i du U formé par le tronçon 2d.

Le blocage de la plaque 2 sur le porte-bagage 1 va maintenant être décrit en référence aux figures 2, 3 et 4.

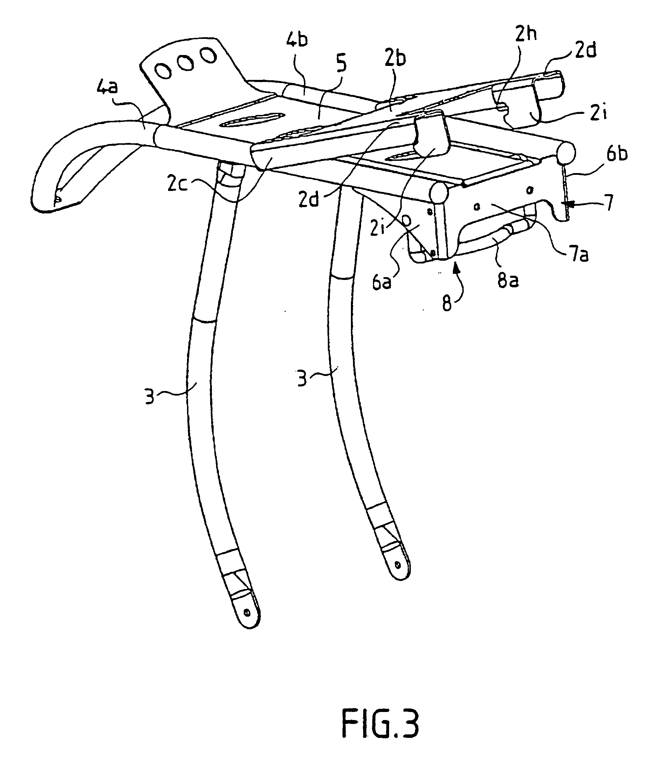

Dans un premier temps, comme représenté sur la figure 3, l'utilisateur introduit les prolongements 2e dans les évidements longitudinaux ménagés entre chaque tube 4a, 4b et la partie centrale de la pièce d'arrêt 5, jusqu'à ce que les tronçons 2c viennent en butée contre les pièces d'arrêt intermédiaires 5a et 5b.

Dans un second temps, à partir de l'appui ainsi réalisé, l'utilisateur fait pivoter la plaque 2, abaissant les tronçons arrière 2d vers les tubes 4a et 4b et tire la portion 8a de la poignée 8 vers l'arrière du porte-bagages 1, ce qui a pour effet de basculer les extrémités 8c de la tige vers l'avant du porte-bagages 1. En appliquant les tronçons arrière 2d sur les tubes 4a et 4b, et en lâchant la poignée 8, l'utilisateur enclenche chaque extrémité 8c de la portion 8b de la poignée 8 dans l'encoche 2h correspondante de la plaque 2.

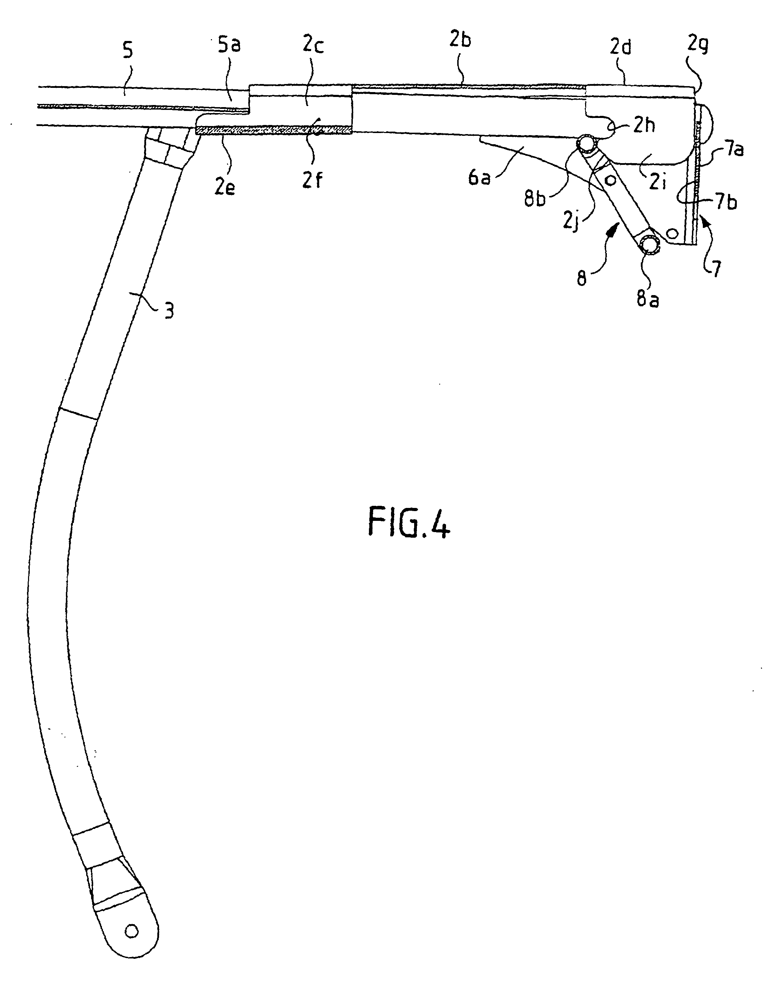

En référence aux figures 2 et 4, lorsque les extrémités 8c de la portion 8b sont bloquées dans les encoches 2h, le déplacement en translation vers l'avant du porte-bagages 1 de la plaque 2 par rapport au porte-bagage est efficacement empêché, d'une part du fait du blocage en butée des tronçons 2c contre les pièces d'arrêt intermédiaires 5a et 5b et, d'autre part, du fait du blocage des encoches 2h par les extrémités 8c qui sont fermement maintenues en position par les ressorts R, lorsque l'utilisateur relâche la poignée 8.

Le déplacement en translation de la plaque 2 vers l'arrière du porte-bagages 1 est limité par la présence de la butée transversale 7 qui stoppe la portion arrière 2g des tronçons arrière 2d.

Le soulèvement de la plaque 2 par rapport au porte-bagages 1 est évité par la présence des prolongements 2e qui viennent en butée contre le dessous des pièces d'arrêt intermédiaires 5a et 5b lorsqu'ils sont dans la position représentée sur la figure 4 et par les extrémités 8c de la portion 8b qui sont engagées dans les encoches 2h et maintenues dans cette position par les ressorts R.

Le maintien latéral de la plaque à fixer 2 est assuré par les tronçons en U, 2c et 2d qui recouvrent les tubes longitudinaux 4a et 4b et limitent donc le déplacement latéral de la plaque 2 par rapport aux tubes latéraux 4a, 4b du porte-bagages 1.

La présente invention n'est pas limitée au mode de réalisation précédemment décrit. En particulier, le premier moyen de verrouillage peut être formé d'une portion continue de tige. De même, le mode de fixation de la plaque 2 sur le porte-bagages 1 n'est pas limité à celui précédemment décrit. En particulier, en fonction de la force exercée par les moyens de rappel, il est possible d'enclencher les extrémités 8c dans les encoches 2h par simple poussée sur la plaque 2 sans actionner la poignée 8, en donnant à la portion inférieure de la branche intérieure 2i du U dans laquelle est formée l'encoche 2h un profil oblique 2j, comme illustré sur la figure 4. Ce profil 2j est prévu en sorte de permettre, par simple poussée sur la plaque 2, le glissement des extrémités 8c de la portion 8b de la poignée 8 dans les encoches 2h, lorsque les tronçons 2c sont en butée contre les pièces d'arrêt intermédiaires 5a, 5b.

De plus, la poignée 8 peut également être constituée, par exemple, d'une plaque montée pivotante sous les tubes longitudinaux 4a et 4b.

De préférence, l'ossature du porte-bagages 1 est formée par un unique tube coudé. La pièce de connexion F est alors définie par le coude du tube et les deux tubes longitudinaux 4a et 4b sont formés par les portions longitudinales et sensiblement parallèles qui s'étendent de chaque coté du coude.

## Revendications

1. Dispositif de fixation d'un accessoire sur un porte-bagages, ledit dispositif comprenant un porte-bagages (1) et une plaque (2) à fixer à l'accessoire, ladite plaque (2) étant équipée de moyens de liaison (2a) au porte-bagages (1), le porte-bagages comportant :
a) latéralement, deux tubes longitudinaux (4a, 4b) définissant l'ossature du porte-bagages (1), chaque tube (4a, 4b) étant muni d'une pièce d'arrêt intermédiaire (5a, 5b),
b) à l'arrière et en dessous des deux tubes (4a, 4b), un premier moyen de verrouillage (8b) et une poignée transversale (8) d'actionnement dudit premier moyen de verrouillage(8b) ;
la plaque à fixer (2) à l'accessoire comportant :
c) latéralement et sous le plan de la plaque (2) deux prolongement avant (2e) orientés vers l'avant de la plaque (2) ;
d) des moyens (2c, 2d) de maintien latéral de la plaque à fixer (2) par rapport aux tubes longitudinaux (4a, 4b) ;
e) et, à l'arrière et sous le plan de la plaque (2), un second moyen de verrouillage (2h) apte à coopérer avec le premier moyen de verrouillage (8b) du porte-bagages (1);
le porte-bagages (1) et la plaque (2) étant conformés en sorte que, pour la fixation de la plaque (2) sur le porte-bagages (1), les deux prolongements (2e) étant introduits sous les deux pièces d'arrêt (5a, 5b) et les moyens de maintien latéral étant appliqués sur les deux tubes longitudinaux (4a, 4b), le premier et le second moyens de verrouillage (8b, 2h) coopèrent pour bloquer la plaque (2) et le porte-bagages (1) l'un à l'autre.

2. Dispositif selon la revendication 1, **caractérisé en ce que** les moyens de maintien latéral de la plaque à fixer (2) par rapport aux tubes longitudinaux (4a, 4b) consistent en deux portions ou tronçons de portions longitudinales en U (2c, 2d), disposées latéralement et sous le plan de la plaque à fixer (2) et qui sont ouvertes vers le bas en sorte de pouvoir recouvrir les deux tubes longitudinaux (4a, 4b) lorsque la plaque à fixer (2) est bloquée sur le porte-bagages (1).

3. Dispositif selon la revendication 2, **caractérisé en ce que** chacun des prolongements (2e) prolonge une branche du U desdites portions.

4. Dispositif selon l'une quelconque des revendications 1 à 3, **caractérisé en ce que** les deux pièces d'arrêt intermédiaires (5a, 5b) sont constituées par une entretoise (5) plane s'étendant horizontalement entre les deux tubes longitudinaux (4a, 4b).

5. Dispositif selon l'une quelconque des revendications 1 à 4, **caractérisé en ce que** le premier moyen de verrouillage (8b) est une tige montée pivotante sous les deux tubes longitudinaux (4a, 4b).

6. Dispositif selon la revendication 5, **caractérisé en ce que** la poignée (8) est constituée d'une tige qui comprend une première portion (8a) faisant office de poignée et une seconde portion (8b) faisant office de premier moyen de verrouillage, la tige étant montée pivotante entre la première portion (8a) et la seconde portion (8b).

7. Dispositif selon l'une quelconque des revendications 1 à 6, **caractérisé en ce que** le porte-bagages (1) comporte des renforts latéraux arrière (6a, 6b) disposés sous les tubes longitudinaux (4a, 4b) et **en ce que** la poignée (8) est montée pivotante entre les renforts (6a, 6b).

8. Dispositif selon l'une quelconque des revendications 1 à 7 **caractérisé en ce que** le premier moyen de verrouillage (8b) est muni de moyens de rappel (R) permettant le blocage des moyens de verrouillage (8b, 8c, 2h) lorsque ceux-ci ont coopéré pour bloquer la plaque (2) et le porte-bagages (1) l'un à l'autre.

9. Dispositif selon l'une quelconque des revendications 1 à 8, **caractérisé en ce que** le porte-bagages (1) comporte également une butée transversale arrière (7) qui forme une entretoise entre les deux tubes longitudinaux (4a, 4b) et qui s'étend sous les tubes (4a, 4b), sensiblement perpendiculairement au plan défini par les tubes longitudinaux (4a, 4b).

10. Dispositif selon les revendications 7 et 9, **caractérisé en ce que** la butée transversale arrière (7) forme une entretoise entre les renforts latéraux arrière (6a, 6b).

## Patentansprüche

1. Vorrichtung zum Befestigen eines Zubehörs an einem Gepäckträger, wobei die Vorrichtung einen Gepäckträger (1) und eine an dem Zubehör zu befestigende Platte (2) enthält, wobei die Platte (2) mit Mitteln (2a) zum Verbinden mit dem Gepäckträger (1) ausgestattet ist, wobei der Gepäckträger folgendes aufweist:
a) seitlich zwei Längsrohre (4a, 4b), welche das Gerippe des Gepäckträgers (1) definieren, wobei jedes Rohr (4a, 4b) mit einem Zwischenarretierteil (5a, 5b) versehen ist,
b) im hinteren Teil und unterhalb der beiden Rohre (4a, 4b) ein erstes Verriegelungsmittel (8b) und einen querverlaufenden Griff (8) zum Betätigen des ersten Verriegelungsmittels (8b);
wobei die an dem Zubehör zu befestigende Platte (2) folgendes aufweist:
c) seitlich und unter der Ebene der Platte (2) zwei vordere Verlängerungen (2e) die zum Vorderteil der Platte (2) gerichtet sind;
d) Mittel (2c, 2d) zum seitlichen Halten der zu befestigenden Platte (2) gegenüber den Längsrohren (4a, 4b);
e) und im hinteren Teil und unter der Ebene der Platte (2) ein zweites Verriegelungsmittel (2h), welches ausgebildet ist, um mit dem ersten Verriegelungsmittel (8b) des Gepäckträgers (1) zusammenzuwirken;
wobei der Gepäckträger (1) und die Platte (2) derart ausgebildet sind, dass zum Befestigen der Platte (2) an dem Gepäckträger (1), wobei die beiden Verlängerungen (2e) unter den beiden Arretierteilen (5a, 5b) eingeführt und die Mittel zum seitlichen Halten auf die beiden Längsrohre (4a, 4b) aufgelegt werden, das erste und das zweite Verriegelungsmittel (8b, 2h) zusammenwirken, um die Platte (2) und den Gepäckträger (1) aneinander festzulegen.

2. Vorrichtung nach Anspruch 1, **dadurch gekennzeichnet, dass** die Mittel zum seitlichen Halten der zu befestigenden Platte (2) gegenüber den Längsrohren (4a, 4b) aus zwei Teilen oder Abschnitten von U-förmigen Längsteilen (2c, 2d) bestehen, die seitlich und unter der Ebene der zu befestigenden Platte (2) angeordnet sind und die nach unten offen sind, um die beiden Längsrohre (4a, 4b) bedecken zu können, wenn die zu befestigende Platte (2) an dem Gepäckträger (1) festgelegt ist.

3. Vorrichtung nach Anspruch 2, **dadurch gekennzeichnet, dass** eine jede der Verlängerungen (2e) einen Schenkel des U der genannten Teile verlängert.

4. Vorrichtung nach irgendeinem der Ansprüche 1 bis 3, **dadurch gekennzeichnet, dass** die beiden Zwischenarretierteile (5a, 5b) von einem flachen Steg (5) gebildet sind, der sich horizontal zwischen den beiden Längsrohren (4a, 4b) erstreckt.

5. Vorrichtung nach irgendeinem der Ansprüche 1 bis 4, **dadurch gekennzeichnet, dass** das erste Verriegelungsmittel (8b) eine Stange ist, die schwenkbar unter den beiden Längsrohren (4a, 4b) angebracht ist.

6. Vorrichtung nach Anspruch 5, **dadurch gekennzeichnet, dass** der Griff (8) von einer Stange gebildet ist, die einen ersten Teil (8a) aufweist, der als Griff dient, sowie einen zweiten Teil (8b), welcher als erstes Verriegelungsmittel dient, wobei die Stange zwischen dem ersten Teil (8a) und dem zweiten Teil (8b) schwenkbar angebracht ist.

7. Vorrichtung nach irgendeinem der Ansprüche 1 bis 6, **dadurch gekennzeichnet, dass** der Gepäckträger (1) hintere Seitenverstärkungen (6a, 6b) aufweist, die unter den Längsrohren (4a, 4b) angeordnet sind, und dass der Griff (8) zwischen den Verstärkungen (6a, 6b) schwenkbar angebracht ist.

8. Vorrichtung nach irgendeinem der Ansprüche 1 bis 7, **dadurch gekennzeichnet, dass** das erste Verriegelungsmittel (8b) mit Rückstellmitteln (R) versehen ist, die das Blockieren der Verriegelungsmittel (8b, 8c, 2h) ermöglichen, wenn diese zusammengewirkt haben, um die Platte (2) und den Gepäckträger (1) aneinander festzulegen.

9. Vorrichtung nach irgendeinem der Ansprüche 1 bis 8, **dadurch gekennzeichnet, dass** der Gepäckträger (1) auch einen hinteren Queranschlag (7) aufweist, der einen Steg zwischen den beiden Längsrohren (4a, 4b) bildet und der sich unter den Rohren (4a, 4b) im Wesentlichen senkrecht zu der durch die Längsrohre (4a, 4b) definierten Ebene erstreckt.

10. Vorrichtung nach den Ansprüchen 7 und 9, **dadurch gekennzeichnet, dass** der hintere Queranschlag (7) einen Steg zwischen den hinteren Seitenverstärkungen (6a, 6b) bildet.

## Claims

1. Device for fixing an accessory to a luggage carrier, the said device comprising a luggage carrier (1) and a plate (2) for fixing to the accessory, the said plate (2) being provided with means (2a) for connection to the luggage carrier, the luggage carrier comprising:
a) at the sides, two longitudinal tubes (4a, 4b) forming the frame of the luggage carrier (1), each tube (4a, 4b) being provided with an intermediate stop piece (5a, 5b),
b) at the rear of and below the two tubes (4a, 4b), a first locking means (8b) and a transverse handle (8) for operating the said first locking means (8b);
the plate (2) for fixing to the accessory comprising:
c) at the sides of the plate (2) and below its plane, two forward extensions (2e) orientated towards the front of the plate (2);
d) means (2c, 2d) for laterally securing the fixing plate (2) with respect to the longitudinal tubes (4a, 4b);
e) and, at the rear of the plate (2) and below its plane, a second locking means (2h) for interacting with the first locking means (8b) of the luggage carrier (1);
the luggage carrier (1) and the plate (2) being shaped in such a way that, when the plate (2) is to be fixed to the luggage carrier (1), after the two extensions (2e) have been introduced under the two stop pieces (5a, 5b) and the lateral securing means have been fitted on the two longitudinal tubes (4a, 4b), the first and the second locking means (8b, 2h) interact to lock the plate (2) and the luggage carrier (1) together.

2. Device according to Claim 1, **characterized in that** the lateral means for securing the fixing plate (2) with respect to the longitudinal tubes (4a, 4b) consist of two U-shaped longitudinal portions or partial portions (2c, 2d), which are positioned laterally and below the plane of the fixing plate (2) and which are open underneath so that they can cover the two longitudinal tubes (4a, 4b) when the fixing plate (2) is locked to the luggage carrier (1).

3. Device according to Claim 2, **characterized in that** each of the extensions (2e) extends one branch of the U shape of the said portions.

4. Device according to any one of Claims 1 to 3, **characterized in that** the two intermediate stop pieces (5a, 5b) are formed by a flat brace (5) extending horizontally between the two longitudinal tubes (4a, 4b).

5. Device according to any one of Claims 1 to 4, **characterized in that** the first locking means (8b) is a rod pivoted under the two longitudinal tubes (4a, 4b).

6. Device according to Claim 5, **characterized in that** the handle (8) consists of a rod which comprises a first portion (8a) acting as the handle and a second portion (8b) acting as the first locking means, the rod being pivoted between the first portion (8a) and the second portion (8b).

7. Device according to any one of Claims 1 to 6, **characterized in that** the luggage carrier (1) comprises lateral rear reinforcing pieces (6a, 6b) positioned under the longitudinal tubes (4a, 4b), and **in that** the handle (8) is pivoted between the reinforcing pieces (6a, 6b).

8. Device according to any one of Claims 1 to 7, **characterized in that** the first locking means (8b) is provided with return means (R) enabling the locking means (8b, 8c, 2h) to be secured when they have interacted to lock the plate (2) and the luggage carrier (1) together.

9. Device according to any one of Claims 1 to 8, **characterized in that** the luggage carrier (1) also comprises a rear transverse stop (7) which forms a brace between the two longitudinal tubes (4a, 4b) and which extends below the tubes (4a, 4b), approximately perpendicularly to the plane defined by the longitudinal tubes (4a, 4b).

10. Device according to Claims 7 and 9, **characterized in that** the rear transverse stop (7) forms a brace between the rear lateral reinforcing pieces (6a, 6b).
